# EUROPÄISCHE PATENTSCHRIFT

(11) **EP 1 632 806 B1**
(45) Veröffentlichungstag und Bekanntmachung des Hinweises auf die Patenterteilung: **19.11.2014**
(21) Anmeldenummer: 05018446.4
(22) Anmeldetag: 25.08.2005
(51) Int. Cl.: G02B 27/54

(54) **Farbschlierenvorrichtung und Farbschlierenverfahren**
Color Schlieren device and method
Dispositif et méthode de strioscopie polychromatique

(30) Priorität: 02.09.2004 DE 102004043410
(43) Veröffentlichungstag der Anmeldung: 08.03.2006
(73) Patentinhaber: Deutsches Zentrum für Luft- und Raumfahrt e.V., 51147 Köln (DE)
(72) Erfinder: Ciezki, Helmut Konrad, Dr., 74172 Neckarsulm (DE); Schmidt, Volker, 74219 Möckmühl (DE)
(74) Vertreter: Hoeger, Stellrecht & Partner Patentanwälte

(56) Entgegenhaltungen:
- WO-A-99/67671
- WO-A-2004/072713
- DE-A1- 10 048 791
- DATABASE INSPEC [Online] THE INSTITUTION OF ELECTRICAL ENGINEERS, STEVENAGE, GB Juli 1983 GUNARATHNE G P P ET AL: 'A new stroboscope for schlieren and photoelastic visualization of ultrasound', XP002999073 Database accession no. 2093949 -& Ultrasonics UK, Bd. 21, Nr. 4, Juli 1983 (1983-07), Seiten 188-190, XP002350295 ISSN: 0041-624X

## Beschreibung

Die Erfindung betrifft eine Farbschlierenvorrichtung zur Untersuchung von Prozessen mit lichtablenkenden Vorgängen in transparenten Medien, mit mindestens einer Lichtquelle, wobei ein Untersuchungsbereich einer Probe durch Licht unterschiedlicher Farben beleuchtbar ist.

Die Erfindung betrifft weiter ein Farbschlierenverfahren zur Untersuchung von Prozessen mit lichtablenkenden Vorgängen in transparenten Medien, bei dem ein Bündel farbigen Lichts einen Untersuchungsbereich einer Probe durchstrahlt.

Mit einer Farbschlierenvorrichtung durchgeführte Farbschlierenverfahren sind beispielsweise aus den Artikeln von Helmut K. Ciezki "Investigation of the Combustion Behaviour of Solid Fuel Slabs in a Planar Step Combustor with a Colour Schlieren Technique", 35th AIAA/ASME/SAE/ASEE Joint Propulsion Conference and Exhibit, 20. bis 24. Juni 1999, Los Angeles, USA, von Helmut K. Ciezki et al. "Combustion of Solid-Fuel Slabs Containing Boron Particles in Step Combustor", Journal of Propulsion and Power, Vol. 19, Nr. 6, November-Dezember 2003, von Helmut K. Ciezki und Emmanuel Kehringer "Untersuchungen zum Verbrennungsverhalten von Festbrennstoffen mittels einer Farbschlierenapparatur", Proceedings of the 29th International Annual Conference of ICT, 30. Juni bis 3. Juli 1998, Karlsruhe und von V. Schmidt und H. K. Ciezki "Schlieren and OH Emission Visualization of the Primary Ignition Process of a Coaxial GH2/LOX Spray", 7th Symp on Fluid Control, Measurement and Visualization bekannt.

Aus der US 2002/0036276 A1 ist ein Verfahren zur Überwachung eines Fluids bezüglich Übereinstimmung mit einer vorgegebenen Spezifikation bekannt, wobei das Fluid durchstrahlt wird.

In dem Artikel "A new stroboscope for schlieren and photoelastic visualization of ultrasound" von G.P.P. Gunarathne und J. Szilard ist ein Stroboskop beschrieben, welcher auf einer Leuchtdiode basiert.

Aus der WO 99/67671 A1 ist ein Verfahren zur Modulieren eines einfallenden Lichtstrahls zur Bildung eines zweidimensionalen Bildes bekannt.

Aus der WO 2004/072713 A2 ist ein Projektionsdisplaysystem bekannt.

Aus der DE 100 48 791 A1 ist eine Farbmaske für eine Farbschlierenapparatur mit mindestens einer Lichtdurchtrittsfläche bekannt, wobei die Farbmaske mindestens eine Kalibriereinrichtung zum Verändern der Lichtdurchtrittsfläche hinsichtlich ihrer Lage an der Farbmaske und/oder hinsichtlich ihrer Geometrie umfaßt.

Schlierenverfahren werden zur Untersuchung von Prozessen mit lichtablenkenden Vorgängen in transparenten Medien eingesetzt. Durch Schlierenverfahren können stationäre oder zeitabhängige Inhomogenitäten, Dichtegradienten, Temperaturgradienten, Konzentrationsgradienten oder Dichteänderungen, Temperaturänderungen oder Konzentrationsänderungen in Gasen, Flüssigkeiten, Gelen, Gläsern und Feststoffen dargestellt werden.

Schlierenverfahren beruhen darauf, daß Lichtstrahlen, die ein Gebiet mit einem senkrecht zu ihrer Ausbreitungsrichtung verlaufenden BrechungsindexGradienten passieren, aus ihrer Ausbreitungsrichtung abgelenkt werden.

Diese Ablenkung führt bei Schwarz-Weiß-Schlierenverfahren, bei denen der Untersuchungsbereich eines Probekörpers mit weißem Licht durchstrahlt wird, auf dem Schlierenbild zu lokalen Aufhellungen oder Abdunklungen oder zu unterschiedlichen Grauwerten, durch welche das Gradientenfeld sichtbar gemacht werden kann. Allerdings kann das menschliche Auge Grauwerte schlecht voneinander unterscheiden.

Bei Farbschlierenverfahren wird das Gradientenfeld durch unterschiedliche Farben dargestellt, was eine verbesserte Interpretation des Schlierenbilds erlaubt.

Der Erfindung liegt die Aufgabe zugrunde, eine Farbschlierenvorrichtung und ein Farbschlierenverfahren bereitzustellen, welche kompakt aufgebaut ist bzw. welches auf einfache Weise einsetzbar ist.

Diese Aufgabe wird bei der eingangs genannten Farbschlierenvorrichtung erfindungsgemäß dadurch gelöst, daß die mindestens eine Lichtquelle mittels Leuchtdioden gebildet ist, welche in unterschiedlichen Farben abstrahlen, daß eine Mehrzahl von Leuchtdioden in einem Feld angeordnet ist, wobei die Leuchtdioden in dem Feld in Zeilen in einer ersten Richtung und in einer Querrichtung zu der ersten Richtung angeordnet sind und daß Leuchtdioden unterschiedlicher Grundfarben in dem Feld in einer vorgegebenen Anordnung positioniert sind, so daß der Untersuchungsbereich mit einer bestimmten Farbabfolge mit Mischfarben beleuchtbar ist.

Aus dem Stand der Technik ist es bekannt, eine Lichtquelle für farbiges Licht durch die Kombination eines Funkenblitzes mit einer Farbmaske zu bilden. Durch die erfindungsgemäße Lichtquelle, welche mittels Leuchtdioden gebildet ist, läßt sich die entsprechende Farbschlierenvorrichtung kompakter und einfacher aufbauen, da insbesondere keine Farbmaske mehr vorgesehen werden muß.

Durch die Verwendung einer Lichtquelle, welche mittels mehreren Leuchtdioden gebildet ist, läßt sich eine Schwarz-Weiß-Schlierenvorrichtung auf einfache Weise in eine Farbschlierenvorrichtung umrüsten.

Durch die Verwendung einer Leuchtdioden-Lichtquelle lassen sich Lichtleistung der Lichtquelle und Blitzdauer in weiten Bereichen unabhängig voneinander variieren. Damit können beispielsweise variable Aufnahmedauern realisiert werden, ohne Änderungen an einer Detektorkonfiguration vornehmen zu müssen.

Durch die Verwendung von Leuchtdioden lassen sich kurze Blitzzeiten mit genügender Lichtleistung erzielen. Die Blitze können bei Bedarf in enger zeitlicher Abfolge erzeugt werden. Beispielsweise lassen sich Blitzdauern unterhalb einer Mikrosekunde erreichen, wobei beispielsweise Leistungen von 100 W pro Puls erzielbar sind. Es lassen sich dadurch wiederum Hochgeschwindigkeitsvideos bzw. Hochgeschwindigkeitsfilme aufnehmen; insbesondere lassen sich Bildabstände in der Größenordnung 5 µs oder kleiner realisieren. Insbesondere läßt sich ein Stroboskop-Modus einstellen, in dem der Untersuchungsbereich geblitzt beleuchtet wird.

Es ist dabei auch möglich, die Lichtquelle so anzusteuern, daß der Untersuchungsbereich kontinuierlich bzw. kontinuierlich erscheinend beleuchtet wird. Diese kontinuierliche Beleuchtung kann echt in dem Sinne sein, daß sie zeitlich konstant ist, oder so erfolgen, daß sie für das menschliche Auge kontinuierlich erscheint. Es ist dann beispielsweise ermöglicht, den Schlierenaufbau einzurichten und auf den Versuchsvorgang bzw. die zu untersuchenden Vorgänge abzustimmen. Für die kontinuierliche Beleuchtung ist keine zusätzliche Beleuchtungsquelle notwendig.

Die Lichtquelle mit den Leuchtdioden läßt sich elektronisch einstellen. Insbesondere kann die Intensität der einzelnen Farben definiert eingestellt werden. Dadurch ist eine Kalibrierung möglich; es lassen sich die Farbhelligkeiten in Bezug auf die Einzelkomponenten abgleichen und auch die Farbtöne von Mischfarben optimieren. Diese Einstellung läßt sich dabei auf elektronische Weise über Steuerung der Versorgungsspannung bzw. des Versorgungsstroms der Leuchtdioden erreichen. Es wird keine Farbmarke mehr benötigt.

Durch die Verwendung von Leuchtdioden zur Bildung der Lichtquelle ist auch die Störlichtunterdrückung auf der Beobachtungsseite (Detektorseite) vereinfacht. Es lassen sich ein oder mehrere (optische) Filter, wie beispielsweise ein Dreibandfilter, einsetzen.

Die erfindungsgemäße Farbschlierenvorrichtung läßt sich für eindimensionale oder zweidimensionale Schlierenverfahren verwenden.

Es ist insbesondere vorteilhaft, wenn die mindestens eine Lichtquelle mittels einer Mehrzahl schmalbandiger Hochleistungsleuchtdioden gebildet ist. Dadurch läßt sich eine einfache Farbkalibrierung der Vorrichtung erreichen. Weiterhin lassen sich Streulichtintensitäten gezielt ausfiltern.

Es sind Leuchtdioden vorgesehen, welche in unterschiedlichen Farben abstrahlen. Dadurch können gezielt Mischfarben in einer bestimmten Reihenfolge bzw. Anordnung erzeugt werden.

Insbesondere sind Leuchtdioden mit den Grundfarben Rot, Grün und Blau vorgesehen. Solche Leuchtdioden sind kommerziell erhältlich. Es läßt sich dann eine kostengünstige Vorrichtung realisieren.

Es ist eine Mehrzahl von Leuchtdioden in einem Feld angeordnet. In dem Feld sind dann Farbfelder entsprechend den Grundfarben der Leuchtdioden gebildet. Die Farbfelder lassen sich je nach Anwendungsfall so ausbilden (bezüglich Größe, Anordnung und Farbe), daß sich ein optimales Detektionsergebnis ergibt. Das Feld ist beispielsweise rechteckig. Es kann auch ringförmig oder segmentartig ausgebildet sein. Die optimierte Feldgestalt richtet sich nach dem Anwendungsfall.

Die Leuchtdioden sind in dem Feld in Zeilen in einer ersten Richtung und in Zeilen in einer Querrichtung zur ersten Richtung angeordnet, das heißt es ist ein Array oder eine Matrix an Leuchtdioden gebildet. Es ist dadurch eine definierte geometrische Anordnung der Leuchtdioden vorgegeben, die der Anordnung der Farbfelder auf einer Farbmaske entspricht. Die Leuchtdioden in dem Feld lassen sich einzeln ansteuern, um ein definiertes Lichtbündel farbigen Lichts zu erzeugen. Durch die Anordnung in Zeilen wird auch der Aufbau vereinfacht. Beispielsweise läßt sich eine Kollimatoreinrichtung vereinfacht ausbilden.

Es sind dabei Leuchtdioden unterschiedlicher Grundfarben in dem Feld angeordnet. Dies ist insbesondere vorgesehen, wenn nur eine einzige Lichtquelle vorgesehen ist. Die Leuchtdioden sind dann entsprechend den Farbfeldern einer Farbmaske (vgl. beispielsweise DE 100 48 791 A1) angeordnet.

Es sind Leuchtdioden unterschiedlicher Grundfarben in dem Feld in einer vorgegebenen Anordnung so positioniert, daß der Untersuchungsbereich mit einer bestimmten Farbabfolge mit Mischfarben beleuchtbar ist.

Beispielsweise ist die Anordnung derart, daß, wenn in dem Untersuchungsbereich kein Gradient vorliegt, nur grünes Licht an einer Beobachtungsseite registrierbar ist. Dies ist die "Grundkalibrierung" der Vorrichtung. Bei grünem Licht ist das Auge am empfindlichsten und man liegt in der Mitte des Regenbogens. Änderungen lassen sich dann leichter erkennen.

Ganz besonders vorteilhaft ist es, wenn den Leuchtdioden eine Kollimatoreinrichtung zugeordnet ist, um die Lichtausbeute zu erhöhen. Die Kollimatoreinrichtung umfaßt insbesondere eine oder mehrere Linsen. Es kann dabei einer Mehrzahl von Leuchtdioden eine einzigen Linse zugeordnet sein (beispielsweise eine Zylinderlinse) oder jeder Leuchtdiode kann eine eigene Linse zugeordnet sein. Kommerzielle Leuchtdioden haben üblicherweise einen Abstrahlungsbereich von 180°. Durch die Kollimatoreinrichtung erfolgt eine Bündelung "nach vorne", um die Lichtausbeute zu erhöhen. Dadurch lassen sich hohe Intensitäten erreichen.

Beispielsweise ist vor jeder Leuchtdiode eine jeweilige Linse angeordnet.

Herstellungstechnisch ist es günstig, wenn die Kollimatoreinrichtung Linsenzeilen aufweist. Es läßt sich dann eine Linsenzeile integral herstellen, die vor eine Leuchtdiodenzeile gesetzt wird.

Die Kollimatoreinrichtung ist insbesondere so angeordnet und ausgebildet, daß sie im wesentlichen keine abbildende Funktion hat. Sie sorgt im wesentlichen nur für eine Bündelung des Lichts nach vorne, ohne eine Abbildung zu bewirken.

Günstig ist es, wenn zwischen beabstandeten Leuchtdiodenzeilen ein Trennsteg angeordnet ist. Dieser ist insbesondere über eine Metallfolie hergestellt. Es kann dadurch für eine Verbesserung der Lichtausbeute gesorgt werden. Ferner läßt sich durch einen solchen Trennsteg dafür sorgen, daß direkt an der Lichtquelle selber keine Farbmischung stattfindet. Dadurch wiederum wird die Kalibrierung vereinfacht und es lassen sich definiert Mischfarben erzeugen.

Es kann auch eine Mehrzahl von Leuchtdiodenfelder (als primäre Lichtquellen) vorgesehen sein.

Insbesondere weisen dann unterschiedliche Leuchtdiodenfelder unterschiedliche Farbencharakteristiken auf. Beispielsweise ist ein Leuchtdiodenfeld für Rot, ein Leuchtdiodenfeld für Grün und ein Leuchtdiodenfeld für Blau vorgesehen. Durch Überlagerung der Lichts der Leuchtdiodenfelder wird dann ein farbiges Lichtbündel zur Beleuchtung des Untersuchungsbereichs gebildet.

Insbesondere weist ein Leuchtdiodenfeld (aus einer Mehrzahl von Leuchtdiodenfeldern) Leuchtdioden der gleichen Farbe auf. Durch Überlagerung des Lichts der verschiedenen Leuchtdiodenfelder läßt sich dann ein Lichtbündel unterschiedlicher Farbe erzeugen.

Beispielsweise ist ein erstes Leuchtdiodenfeld für Leuchtdioden mit der Grundfarbe Rot, ein zweites Leuchtdiodenfeld für Leuchtdioden mit der Grundfarbe Grün und ein drittes Leuchtdiodenfeld für Leuchtdioden mit der Grundfarbe Blau vorgesehen.

Es ist ferner günstig, wenn den Leuchtdiodenfeldern eine optische Einrichtung zur gemeinsamen Beleuchtung des Untersuchungsbereichs zugeordnet ist. Es läßt sich dadurch eine "Gesamtleuchtquelle" realisieren, welche mit Hilfe der einzelnen Leuchtdiodenfelder gebildet ist.

Ganz besonders vorteilhaft ist es, wenn ein oder mehrere Pulsgeneratoren zur Ansteuerung der Leuchtdioden vorgesehen sind. Es lassen sich dadurch Beleuchtungsblitze variabler Dauer einstellen.

Insbesondere sind zur Ansteuerung der Leuchtdioden Pulse variabler Pulsdauer vorgesehen. Dadurch läßt sich die für die jeweilige Anwendung optimale Pulsdauer einstellen. Es lassen sich auch sehr kurze Pulsdauern beispielsweise für Hochgeschwindigkeitsaufnahmen einstellen.

Günstig ist es auch, wenn die Versorgungsspannung und/oder der Versorgungsstrom der Leuchtdioden einstellbar ist. Dadurch läßt sich die Farbintensität einstellen, um so beispielsweise die Farbhelligkeiten im Bezug auf die einzelnen Komponenten abgleichen zu können und Farbtöne und der Mischfarben optimieren zu können.

Vorteilhafterweise ist die Versorgungsspannung und/oder der Versorgungsstrom je Leuchtdiode oder gemeinsam für die Leuchtdioden einer bestimmten Farbe einstellbar.

Es können Rechteckpulse zur Ansteuerung der Leuchtdioden vorgesehen sein. Über die Pulshöhe läßt sich die Versorgungsspannung bzw. Versorgungsstrom einstellen. Über die Pulsdauer läßt sich die Beleuchtungszeit einstellen.

Günstig ist es, wenn die mindestens eine Lichtquelle so ansteuerbar ist, daß der Untersuchungsbereich geblitzt beleuchtbar ist. Dadurch lassen sich beispielsweise in einem Stroboskop-Modus Aufnahmen von dem Untersuchungsbereich machen.

Günstig ist es, wenn die mindestens eine Lichtquelle so ansteuerbar ist, daß der Untersuchungsbereich kontinuierlich oder kontinuierlich erscheinend beleuchtbar ist. Dies kann vorteilhaft sein, um den Schlierenaufbau einzurichten und auf den Versuchsvorgang bzw. die zu untersuchenden Vorgänge abzustimmen. Bei der erfindungsgemäßen Lösung ist dazu keine gesonderte Lichtquelle notwendig, da die kontinuierliche Beleuchtung über Einstellung der Ansteuerung realisierbar ist.

Vorteilhaft ist es, wenn auf einer Beobachtungsseite ein oder mehrere schmalbandige (optische) Filter angeordnet sind, welche nur Licht im Spektralbereich der Leuchtdioden passieren lassen. Dadurch lassen sich Streulichtintensitäten ausfiltern, so daß im wesentlichen nur das von dem Untersuchungsbereich durchgelassene Lichtbündel, welches von der Lichtquelle ausgegangen ist, registriert wird. Beispielsweise ist auf der Beobachtungsseite eine Kamera angeordnet mit einem Dreibandfilter oder es sind mehrere Kameras vorgesehen mit jeweiligen zugeordneten Filtern.

Beispielsweise ist ein Dreibandfilter vorgesehen, welcher bei Leuchtdioden der drei Grundfarben Rot, Grün und Blau Streulicht ausfiltert.

Die eingangs genannte Aufgabe wird bei dem eingangs genannten Farbschlierenverfahren erfindungsgemäß dadurch gelöst, daß das Licht durch Leuchtdioden unterschiedlicher Farben erzeugt wird, wobei eine Mehrzahl von Leuchtdioden in einem Feld angeordnet ist, die Leuchtdioden in dem Feld in Zeilen in einer ersten Richtung und in einer Querrichtung zu der ersten Richtung angeordnet sind und Leuchtdioden unterschiedlicher Grundfarben in dem Feld in einer vorgegebenen Anordnung positioniert sind, so daß der Untersuchungsbereich mit einer bestimmten Farbabfolge mit Mischfarben beleuchtet wird.

Das erfindungsgemäße Farbschlierenverfahren weist die bereits im Zusammenhang mit der erfindungsgemäßen Farbschlierenvorrichtung erläuterten Vorteile auf.

Weitere vorteilhafte Ausführungsformen wurden ebenfalls bereits im Zusammenhang mit der erfindungsgemäßen Vorrichtung erläutert.

Insbesondere wird die Intensität der einzelnen Farben über die Ansteuerung der Leuchtdioden eingestellt.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung eines ersten Ausführungsbeispiels einer erfindungsgemäßen Farbschlierenvorrichtung;
- Figur 2: eine schematische Ansicht eines Ausführungsbeispiels einer Lichtquelle;
- Figur 3: einen Schnitt längs der Linie 3-3 der Lichtquelle gemäß Figur 2 und
- Figur 4: eine schematische Teildarstellung eines zweiten Ausführungsbeispiels einer erfindungsgemäßen Farbschlierenvorrichtung.

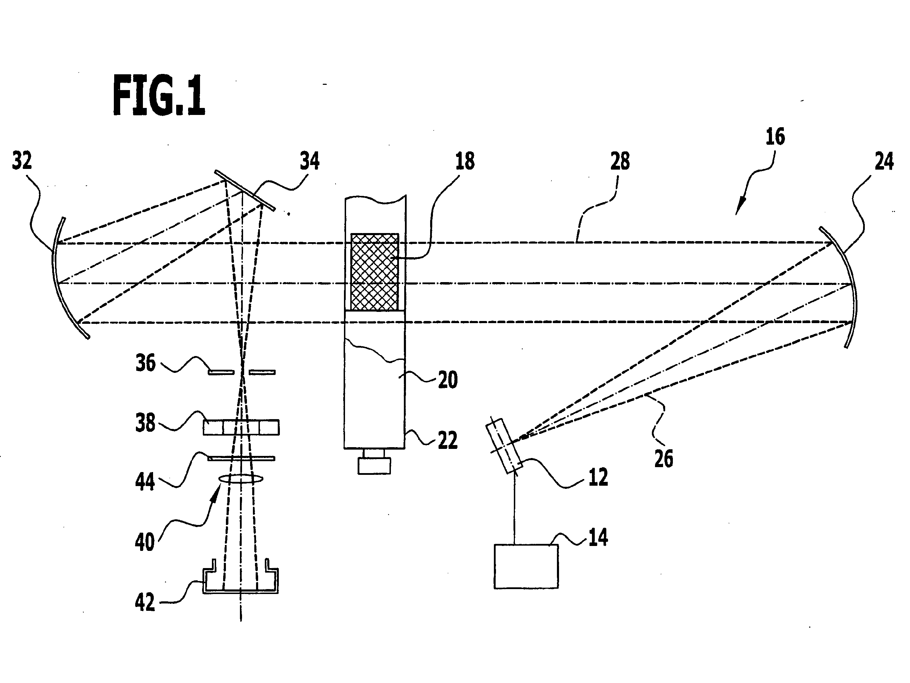

Ein erstes Ausführungsbeispiel einer erfindungsgemäßen Farbschlierenvorrichtung, welche in Figur 1 schematisch gezeigt und dort mit 10 bezeichnet ist, umfaßt eine Lichtquelle 12 für mehrfarbiges Licht. Diese wird untenstehend noch näher beschrieben. Die Lichtquelle 12 wird über einen Pulsgenerator 14 angesteuert.

Der Lichtquelle 12 ist eine als Ganzes mit 16 bezeichnete Abbildungseinrichtung zugeordnet, welche das Licht der Lichtquelle 12 auf einen Untersuchungsbereich 18 einer Probe 20 lenkt.

Bei der Probe handelt es sich beispielsweise um ein Gas, eine Flüssigkeit, ein Gel, ein Glas oder Feststoff, welche in einer Probenaufnahme 22 (Prüfstand) aufgenommen ist. Die Abbildungseinrichtung 16 umfaßt beispielsweise einen Hohlspiegel 24, welcher ein (farbiges) Lichtstrahlenbündel 26 der Lichtquelle 12 auf den Untersuchungsbereich 18 hin reflektiert.

Das von dem Hohlspiegel 24 reflektierte Lichtstrahlenbündel 28 weist im wesentlichen parallel zueinander ausgerichtete Lichtstrahlen auf und durchstrahlt den Untersuchungsbereich 18 der Probe 20.

Auf einer Beobachtungsseite 30 der Farbschlierenvorrichtung 10 ist ein weiterer Hohlspiegel 32 angeordnet, welcher das Lichtstrahlenbündel 28, welches die Probe 20 durchstrahlt hat, auf einen Planspiegel 34 hin richtet.

Der Hohlspiegel 32 ist so angeordnet und ausgebildet, daß das Lichtbündel auf eine Blendenebene fokussiert wird. In der Blendenebene ist beispielsweise eine Spaltebene 36 angeordnet. Es kann auch eine Lochblende oder Ringblende vorgesehen sein. Auch weitere Blendenformen sind möglich. Der Planspiegel 34 sorgt für die Richtung auf diese Spaltblende 36.

Der Spaltblende 36 nachgeordnet ist ein Verschluß 38 angeordnet. Durch den Verschluß 38 gelangt das Lichtstrahlenbündel über eine Abbildungsoptik 40 in eine Kamera 42. Dort belichtet das Licht einen Film oder es wird ein lichtempfindlicher Chip belichtet.

Der Verschluß 38 kann mehrteilig ausgebildet sein und beispielsweise ein Zentralverschluß und ein durch Anlegen oder Abschalten eines elektrischen Feldes abdunkelbaren Flüssigkristallschirm umfassen.

Die Abbildungsoptik 40 kann eine einzelne Linse oder ein Linsensystem umfassen. Die Abbildungsoptik kann auch integraler Bestandteil der Kamera 42 sein.

Für zeitaufgelöste Untersuchungen können der Verschluß 38, die Abbildungsoptik 40 und die Kamera 42 auch durch eine Filmkamera oder Videokamera ersetzt werden.

Auf der Beobachtungsseite 30 sind ein oder mehrere (optische) Filter zur Ausfilterung des Umgebungslichts (Streulichts) und insbesondere zur Reduktion des Tageslichtseinflusses angeordnet. Insbesondere ist ein schmalbandiges Dreibandfilter 44 vorgesehen, welches insbesondere nur schmalbandig angepaßt an die Lichtquelle 12 rotes, grünes und blaues Licht durchläßt.

Das Dreibandfilter 44 kann vor oder hinter der Spaltblende 36 angeordnet sein.

Die Kamera 42 oder eine Filmkamera bzw. Videokamera sind auf den Untersuchungsbereich 18 fokussiert.

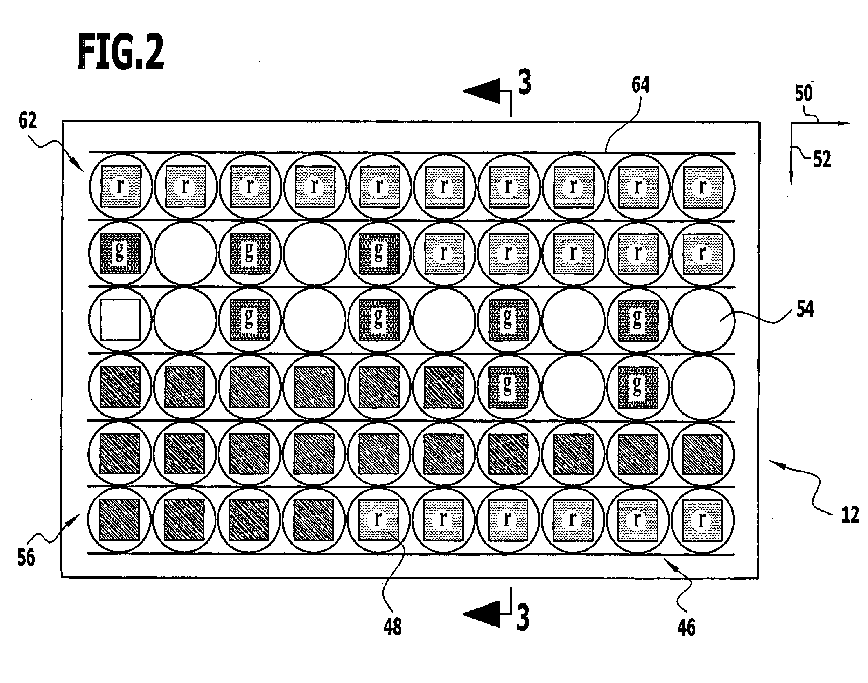

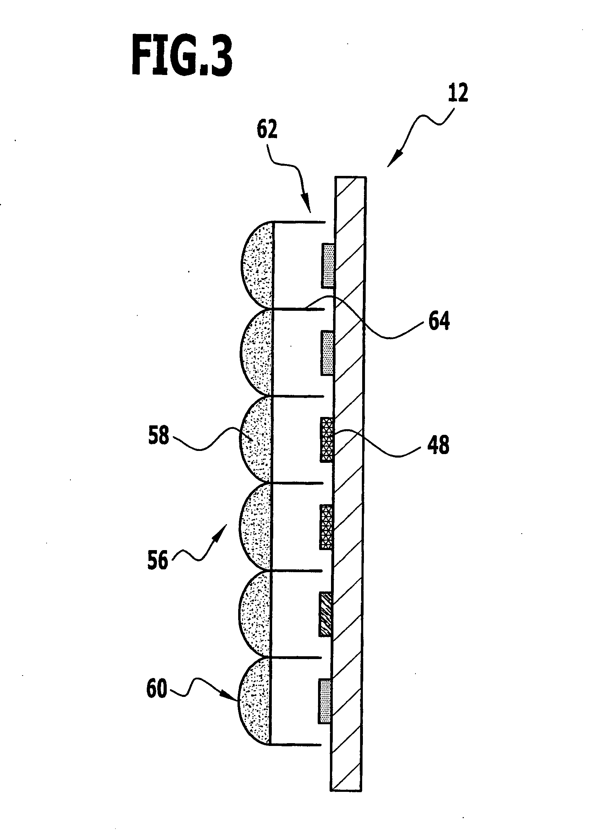

Die Lichtquelle 12 (Figuren 2 und 3) umfaßt eine Mehrzahl von Leuchtdioden 48, bei denen es sich insbesondere um schmalbandige Hochleistungsleuchtdioden handelt. Diese Leuchtdioden 48 sind in einem Feld 46 (Array, Matrix) zeilenweise angeordnet. Das Feld 46 weist Zeilen in einer ersten Richtung 50 und in einer zweiten Richtung 52 auf, wobei die zweite Richtung 52 quer und insbesondere senkrecht zur ersten Richtung 50 liegt. (Die Zeilen in der zweiten Richtung 52 sind Spalten.)

In dem Feld 46 sind Leuchtdioden in den Grundfarben Rot (in Figur 2 durch ein "r" markiert), Grün (in Figur 2 durch ein "g" markiert) und Blau (in Figur 2 nicht markiert) angeordnet. Ferner können in dem Feld 46 Zeilenbereiche 54 vorgesehen sein, an welchen keine Leuchtdiode sitzt. Dadurch sind an der Lichtquelle 12 entsprechende Farbfelder gebildet.

Die Anordnung der Leuchtdioden 48 in dem Feld 46 einschließlich der Farbfeldanordnung ist derart, daß der Untersuchungsbereich 18 der Probe 20 mit einer bestimmtem Farbabfolge mit Mischfarben beleuchtbar ist. Beispielsweise entspricht die Farbabfolge dem Regenbogen.

Die Farbabfolge ist insbesondere so, wie sie mit konventionellen Farbmasken durch die Anordnung von Farbfeldern eingestellt wird. Bei konventionellen Farbmasken sind die Farbfelder mittels Filtern hergestellt. Unterschiedliche Flächengrößen und Geometrien werden aufgrund der Optimierung des Zusammenspiels einer Beleuchtungseinrichtung (über spektrale Verteilung des ausgesandtes Lichtes), Filmmaterial (über spektrale Empfindlichkeit des jeweils eingesetzten Materials) und Farbfiltermaterialien (über Transmissionsverläufe) ermittelt.

Beispielsweise ist die Anordnung der Leuchtdioden 48 in dem Feld 46 derart, daß, wenn kein Gradient in dem Untersuchungsbereich 18 vorliegt, nur grünes Licht an der Beobachtungsseite 30 registriert wird.

Bei der erfindungsgemäßen Lösung sind die Farbfelder direkt an der Lichtquelle 12 über die Anordnung von Leuchtdioden 48 unterschiedlicher Grundfarben hergestellt.

Den Leuchtdioden 48 des Felds 46 ist eine Kollimatoreinrichtung 56 zugeordnet, um die Lichtausbeute der Leuchtdioden 48 nach vorne, das heißt auf den Hohlspiegel 14 hin zu erhöhen. Handelsübliche Leuchtdioden haben üblicherweise eine Abstrahlungscharakteristik von ca. 180°. Die Kollimatoreinrichtung 56 sorgt für eine Verkleinerung des Abstrahlungswinkels bezogen auf die Lichtquelle 12 als Ganzes.

Beispielsweise umfaßt die Kollimatoreinrichtung 56 eine Mehrzahl von Linsen 58 (Figur 3), wobei jeweils eine Linse 58 einer Leuchtdiode 48 zugeordnet ist und in Richtung des Hohlspiegels 24 vor der zugeordneten Leuchtdiode 48 angeordnet ist. Insbesondere sind Linsen 58 in einer Linsenzeile 60 angeordnet, wobei eine solche Linsenzeile 60 vor einer Zeile 62 des Feldes 56 der Leuchtdioden 48 angeordnet ist.

Zwischen benachbarten Leuchtdioden-Zeilen 62 ist jeweils ein Trennsteg 64 angeordnet, welche die Leuchtdioden 48 einer Zeile 62 von den Leuchtdioden einer benachbarten Zeile trennt. Der Trennsteg 64, welcher beispielsweise durch eine reflektierende Metallfolie gebildet ist, ist längs den Linsen 58 einer Linsenzeile 60 angeordnet, und zwar beidseitig an der Linsenzeile 60. Durch den Trennsteg 64 wird die Abstrahlungscharakteristik nach vorne verbessert und die Farbfelder lassen sich zeilenweise trennen.

Die Leuchtdioden 48 des Felds 46 werden über den Pulsgenerator 14 angesteuert. Durch eine Spannungsvariation bzw. Stromvariation kann die Intensität der einzelnen Farben (Rot, Grün, Blau) der Lichtquelle 12 beeinflußt werden und insbesondere eingestellt werden.

Der Pulsgenerator 14 verwendet beispielsweise Rechteckpulse zur Ansteuerung der Leuchtdioden 48 des Felds 46. Die Pulsdauer ist variabel einstellbar. Insbesondere lassen sich Pulsdauern unterhalb 1 µs einstellen.

In einem konkreten Ausführungsbeispiel werden Leistungen von 100 W pro Puls erreicht.

Bei der Aufnahme durch die Kamera 42 bzw. eine Videokamera oder Filmkamera lassen sich beispielsweise minimale Bildabstände unterhalb von 5 µs erreichen. Der wesentliche Begrenzungsfaktor ist der Pulsgenerator und die Wärmeabfuhr von den Leuchtdioden 48.

### Das erfindungsgemäße Farbschlierenverfahren funktioniert wie folgt:

Mittels Farbschlierenverfahren lassen sich Inhomogenitäten, Dichtegradienten, Temperaturgradienten oder Konzentrationsgradienten bzw. Dichteänderungen, Temperaturänderungen oder Konzentrationsänderungen in transparenten Gasen, Flüssigkeiten, Gelen, Gläsern und Feststoffen untersuchen. Es lassen sich Strömungsvorgänge in Strömungskanälen, Windkanälen oder Stoßrohren in Überschallströmungen und Unterschallströmungen sichtbar machen. Es lassen sich beispielsweise auch einphasige und mehrphasige Strömungsvorgänge und Verbrennungsvorgänge untersuchen.

Bei dem erfindungsgemäßen Farbschlierenverfahren wird der Untersuchungsbereich 18 der Probe 20 mittels der Lichtquelle 12 beleuchtet, wobei die Lichtquelle 12 über ein Feld 46 mit Leuchtdioden 48 unterschiedlicher Grundfarben gebildet ist.

Das resultierende Bild wird auf der Beobachtungsseite 30 aufgenommen.

Durch die erfindungsgemäße Lichtquelle 12, welche über die Leuchtdioden 48 gebildet ist, lassen sich Lichtleistung und Blitzdauer in weiten Bereichen unabhängig voneinander variieren und gezielt einstellen. Es lassen sich dadurch beispielsweise variable Aufnahmedauern ohne Änderungen an einer Detektorkonfiguration realisieren.

Durch die Verwendung von schmalbandigen Hochleistungsleuchtdioden lassen sich wesentliche kürzere Blitzzeiten als bei aus dem Stand der Technik im Zusammenhang mit Farbschlierenverfahren bekannten Lichtquellen (bei gleich hoher Lichtleistung) erzielen. Es lassen sich Blitzzeiten in der Größenordnung 1 µs oder kürzer erreichen. Wenn, wie aus dem Stand der Technik bekannt, Funkenblitze entsprechend hoher Leistung als Lichtquelle eingesetzt werden, dann lassen sich nur Belichtungszeiten erreichen, die deutlich über 10 µs liegen. (Beispielsweise wurde eine untere Belichtungszeit von 13 µs erreicht.) Mittels der erfindungsgemäßen Farbschlierenvorrichtung lassen sich Hochgeschwindigkeitsfilme oder -videos mit Bildabständen im Mikrosekundenbereich aufnehmen.

Die Farbschlierenvorrichtung 10 läßt sich kompakt aufbauen, da die Lichtquelle 12 kompakt aufbaubar ist. Insbesondere muß keine Farbmaske mehr vorgesehen werden (vgl. beispielsweise die DE 100 48 791 A1).

Die Lichtquelle 12 mit ihren Leuchtdioden 48 ist elektronisch ansteuerbar und entsprechend einstellbar. Beispielsweise kann so auf einfache Weise eine Blitzbeleuchtung des Untersuchungsbereichs 18 eingestellt werden oder auch eine kontinuierliche Beleuchtung. Kontinuierliche Beleuchtungssituationen können vorteilhaft für visuelle Beobachtungen sein, da es möglich ist, den Gesamtaufbau einzurichten und auf den Versuchsvorgang bzw. die untersuchenden Vorgänge abzustimmen. Für diese kontinuierliche Beleuchtung ist keine getrennte Beleuchtungsquelle notwendig.

Die Lichtquelle 12 läßt sich auch auf einfache Weise kalibrieren. Insbesondere muß keine kalibrierbare Farbmaske (vgl. DE 100 48 791 A1) vorgesehen werden. Durch Variation des jeweiligen Beaufschlagungsstroms bzw. der Beaufschlagungsspannung für die Leuchtdioden 48 kann die Intensität der einzelnen Farben beeinflußt werden und eingestellt werden. Damit können die Farbhelligkeiten (in Bezug auf die Farbeinzelkomponenten Rot, Grün, Blau) abgeglichen werden. Weiterhin ist es möglich, auch die Farbtöne der Mischfarben zu optimieren. Es wird dadurch das gleiche Ergebnis wie bei der Farbmaske der DE 100 48 791 A1 erzielt, wobei bei der erfindungsgemäßen Lösung keine mechanische Einstellung notwendig ist.

Durch die Verwendung von schmalbandigen Leuchtdioden 48 ist auch die Störlichtunterdrückung auf der Beobachtungsseite 30 vereinfacht. Durch das Dreibandfilter 44 kann Streulicht effektiv ausgefiltert werden. (Es ist auch grundsätzlich möglich, daß auf der Beobachtungsseite 30 eine Mehrzahl von Kameras mit getrennten Bandenfiltern oder Linienfiltern angeordnet ist.)

Durch die Kollimatoreinrichtung 56 wird die Lichtausbeute erhöht. Die zwischen den Linsenzeilen 60 angeordneten Trennstege 64 sorgen auch für eine Farbtrennung zwischen den einzelnen Zeilen 62.

Das erste Ausführungsbeispiel 10 wurde mit einer einzigen Lichtquelle 12 beschrieben. Die Lichtquelle 12 umfaßt Farbfelder, welche durch Leuchtdioden 48 unterschiedlicher Grundfarben gebildet sind.

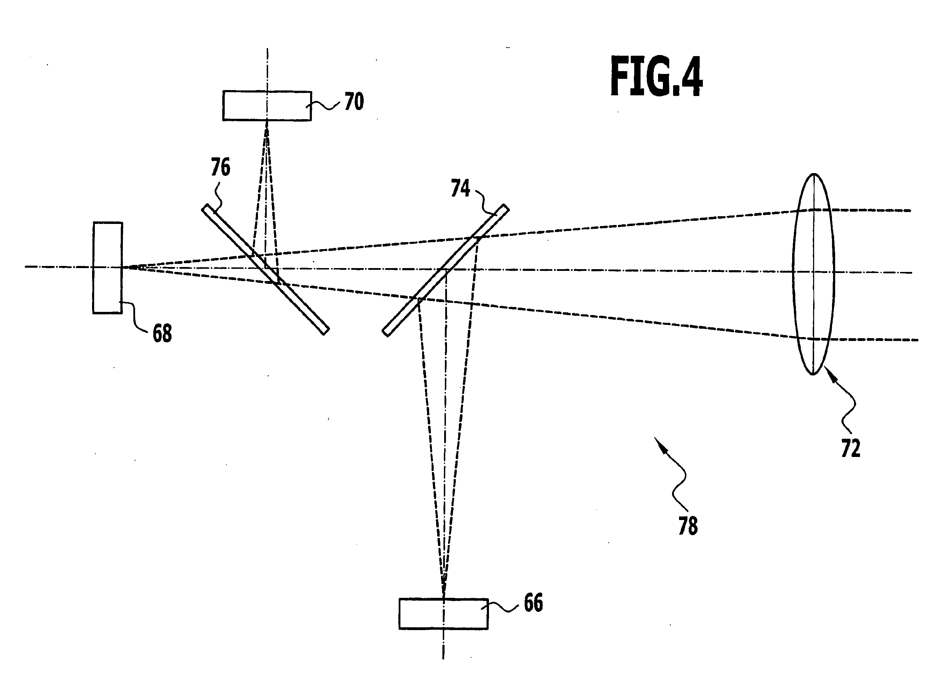

Es ist grundsätzlich auch möglich, wie in Figur 4 schematisch gezeigt, daß mehrere Lichtquellen vorgesehen sind, um den Untersuchungsbereich 18 zu beleuchten, nämlich beispielsweise eine erste Lichtquelle 66, eine zweite Lichtquelle 68 und eine dritte Lichtquelle 70.

Es kann dabei vorgesehen sein, daß jede Lichtquelle 66, 68, 70 nur Leuchtdioden jeweils einer einzigen Grundfarbe aufweist. Beispielsweise umfaßt die erste Lichtquelle 66 als Leuchtdiodenfeld nur rote Leuchtdioden, die zweite Lichtquelle 68 als Leuchtdiodenfeld nur grüne Leuchtdioden und die dritte Lichtquelle 70 als Leuchtdiodenfeld nur blaue Leuchtdioden.

Es ist aber auch grundsätzlich möglich, daß eine oder mehrere der Lichtquellen 66, 68, 70 auch Leuchtdioden unterschiedlicher Grundfarben umfassen.

Die von den Lichtquellen 66, 68, 70 ausgehenden Lichtbündel (welche eine einheitliche Farbe je Lichtquelle haben können oder auch mehrfarbig sein können) können über eine optische Einrichtung 72 auf den Untersuchungsbereich 18 gerichtet werden. Die optische Einrichtung 72 umfaßt beispielsweise eine Linse.

Es kann vorgesehen sein, daß das von der ersten Lichtquelle 66 ausgehende Bündel auf einen halbdurchlässigen und/oder teildurchlässigen ersten Planspiegel 74 gerichtet wird und von dort auf die optische Einrichtung 72 reflektiert wird. Es kann ein zweiter halbdurchlässiger und/oder teildurchlässiger Planspiegel 76 vorgesehen sein, welcher von dem von der zweiten Lichtquelle 68 ausgehenden Lichtbündel durchstrahlt wird. Dieses Lichtbündel durchstrahlt auch den ersten Planspiegel 74.

Das von der dritten Lichtquelle 70 ausgesandte Lichtbündel wird an dem zweiten Planspiegel 76 reflektiert und dabei auf die optische Einrichtung 72 gelenkt.

Bei den Lichtquellen 66, 68, 70 sind die Leuchtdioden beispielsweise wieder zeilenweise in Feldern angeordnet. Die Anordnung erfolgt wie oben beschrieben derart, daß sich am Untersuchungsbereich eine bestimmte Farbabfolge mit Mischfarben zur Beleuchtung der Probe ergibt.

Mittels der Lichtquellen 66, 68, 70 und der Planspiegel 74 und 76 ist eine "Gesamtlichtquelle" 78 gebildet, über welche der Untersuchungsbereich 18 mit mehrfarbigem Licht beleuchtbar ist.

Das Farbschlierenverfahren mit einer solchen Lichtquelle 78 funktioniert grundsätzlich gleich wie oben beschrieben.

## Patentansprüche

1. Farbschlierenvorrichtung zur Untersuchung von Prozessen mit lichtablenkenden Vorgängen in transparenten Medien, mit mindestens einer Lichtquelle (12; 66, 68, 70; 78), wobei ein Untersuchungsbereich (18) einer Probe (20) durch Licht unterschiedlicher Farben beleuchtbar ist, **dadurch gekennzeichnet, daß** die mindestens eine Lichtquelle (12; 66, 68, 70; 78) mittels Leuchtdioden (48) gebildet ist, welche in unterschiedlichen Farben abstrahlen, daß eine Mehrzahl von Leuchtdioden (48) in einem Feld (46) angeordnet ist, wobei die Leuchtdioden (48) in dem Feld (46) in Zeilen (62) in einer ersten Richtung (50) und in einer Querrichtung (52) zu der ersten Richtung (50) angeordnet sind und daß Leuchtdioden (48) unterschiedlicher Grundfarben in dem Feld (46) in einer vorgegebenen Anordnung positioniert sind, so daß der Untersuchungsbereich (18) mit einer bestimmten Farbabfolge mit Mischfarben beleuchtbar ist.

2. Farbschlierenvorrichtung nach Anspruch 1, **dadurch gekennzeichnet, daß** die mindestens eine Lichtquelle (12; 66, 68, 70; 78) mittels einer Mehrzahl schmalbandiger Hochleistungsleuchtdioden (48) gebildet ist.

3. Farbschlierenvorrichtung nach Anspruch 1 oder 2, **dadurch gekennzeichnet, daß** Leuchtdioden mit den Grundfarben Rot, Grün und Blau vorgesehen sind.

4. Farbschlierenvorrichtung nach einem der vorangehenden Ansprüche, **dadurch gekennzeichnet, daß** die Anordnung der Leuchtdioden (48) unterschiedlicher Grundfarben in dem Feld (46) derart ist, daß, wenn in dem Untersuchungsbereich (18) kein Gradient in der Probe vorliegt, nur grünes Licht an einer Beobachtungsseite (30) registrierbar ist.

5. Farbschlierenvorrichtung nach einem der vorangehenden Ansprüche, **dadurch gekennzeichnet, daß** den Leuchtdioden (48) eine Kollimatoreinrichtung (56) zugeordnet ist, um die Lichtausbeute zu erhöhen.

6. Farbschlierenvorrichtung nach Anspruch 5, **dadurch gekennzeichnet, daß** vor jeder Leuchtdiode eine jeweilige Linse (58) angeordnet ist.

7. Farbschlierenvorrichtung nach Anspruch 5 oder 6, **dadurch gekennzeichnet, daß** die Kollimatoreinrichtung (56) Linsenzeilen (60) aufweist.

8. Farbschlierenvorrichtung nach einem der Ansprüche 5 bis 7, **dadurch gekennzeichnet, daß** die Kollimatoreinrichtung (56) so angeordnet und ausgebildet ist, daß sie im wesentlichen keine abbildende Funktion hat und nur für eine Bündelung des Lichts nach vorne sorgt.

9. Farbschlierenvorrichtung nach einem der Ansprüche 5 bis 8, **dadurch gekennzeichnet, daß** zwischen benachbarten Linsenzeilen (60) ein Trennsteg (64) angeordnet ist.

10. Farbschlierenvorrichtung nach einem der vorangehenden Ansprüche, **dadurch gekennzeichnet, daß** eine Mehrzahl von Leuchtdiodenfeldern (66, 68, 70) vorgesehen ist.

11. Farbschlierenvorrichtung nach Anspruch 10, **dadurch gekennzeichnet, daß** unterschiedliche Leuchtdiodenfelder (66; 68; 70) unterschiedliche Farbencharakteristiken aufweisen.

12. Farbschlierenvorrichtung nach Anspruch 10 oder 11, **dadurch gekennzeichnet, daß** ein Leuchtdiodenfeld (66; 68; 70) aus einer Mehrzahl von Leuchtdiodenfelder Leuchtdioden (48) der gleichen Farbe aufweist.

13. Farbschlierenvorrichtung nach Anspruch 12, **dadurch gekennzeichnet, daß** ein erstes Leuchtdiodenfeld (66) für Leuchtdioden mit der Grundfarbe Rot, ein zweites Leuchtdiodenfeld (68) für Leuchtdioden mit der Grundfarbe Grün und ein drittes Leuchtdiodenfeld (70) für Leuchtdioden mit der Grundfarbe Blau vorgesehen sind.

14. Farbschlierenvorrichtung nach einem der Ansprüche 10 bis 13, **dadurch gekennzeichnet, daß** den Leuchtdiodenfeldern (66, 68, 70) eine optische Einrichtung (72) zur gemeinsamem Beleuchtung des Untersuchungsbereichs (18) zugeordnet ist.

15. Farbschlierenvorrichtung nach einem der vorangehenden Ansprüche, **dadurch gekennzeichnet, daß** ein oder mehrere Pulsgeneratoren (14) zur Ansteuerung der Leuchtdioden (48) vorgesehen sind.

16. Farbschlierenvorrichtung nach Anspruch 15, **dadurch gekennzeichnet, daß** zur Ansteuerung der Leuchtdioden (48) Pulse variabler Pulsdauer vorgesehen sind.

17. Farbschlierenvorrichtung nach Anspruch 15 oder 16, **dadurch gekennzeichnet, daß** die Versorgungsspannung und/oder der Versorgungsstrom der Leuchtdioden (48) einstellbar ist.

18. Farbschlierenvorrichtung nach Anspruch 17, **dadurch gekennzeichnet, daß** die Versorgungsspannung und/oder der Versorgungsstrom je Leuchtdiode (48) einstellbar ist oder für die Leuchtdioden (48) einer bestimmten Farbe einstellbar ist.

19. Farbschlierenvorrichtung nach einem der Ansprüche 15 bis 18, **dadurch gekennzeichnet, daß** Rechteckpulse zur Ansteuerung der Leuchtdioden (48) vorgesehen sind.

20. Farbschlierenvorrichtung nach einem der vorangehenden Ansprüche, **dadurch gekennzeichnet, daß** die mindestens eine Lichtquelle (12; 66, 68, 70; 78) so ansteuerbar ist, daß der Untersuchungsbereich (18) geblitzt beleuchtbar ist.

21. Farbschlierenvorrichtung nach einem der vorangehenden Ansprüche, **dadurch gekennzeichnet, daß** die mindestens eine Lichtquelle (12; 66, 68, 70; 78) so ansteuerbar ist, daß der Untersuchungsbereich (18) kontinuierlich oder kontinuierlich erscheinend beleuchtbar ist.

22. Farbschlierenvorrichtung nach einem der vorangehenden Ansprüche, **dadurch gekennzeichnet, daß** auf einer Beobachtungsseite (30) ein oder mehrere schmalbandige Filter (44) angeordnet sind, welche Licht im Spektralbereich der Leuchtdioden (48) passieren lassen.

23. Farbschlierenvorrichtung nach Anspruch 22, **dadurch gekennzeichnet, daß** ein Dreibandfilter (44) vorgesehen ist.

24. Farbschlierenverfahren zur Untersuchung von Prozessen mit lichtablenkenden Vorgängen in transparenten Medien, bei dem ein Bündel farbigen Lichts einen Untersuchungsbereich einer Probe durchstrahlt, **dadurch gekennzeichnet, daß** das Licht durch Leuchtdioden unterschiedlicher Farben erzeugt wird, wobei eine Mehrzahl von Leuchtdioden in einem Feld angeordnet ist, die Leuchtdioden in dem Feld in Zeilen in einer ersten Richtung und in einer Querrichtung zu der ersten Richtung angeordnet sind und Leuchtdioden unterschiedlicher Grundfarben in dem Feld in einer vorgegebenen Anordnung positioniert sind, so daß der Untersuchungsbereich mit einer bestimmten Farbabfolge mit Mischfarben beleuchtet wird.

25. Farbschlierenverfahren nach Anspruch 24, **dadurch gekennzeichnet, daß** rotes, grünes und blaues Licht mittels entsprechender Leuchtdioden erzeugt wird.

26. Farbschlierenverfahren nach Anspruch 24 oder 25, **dadurch gekennzeichnet, daß** die Intensität der einzelnen Farben über Ansteuerung der Leuchtdioden eingestellt wird.

27. Farbschlierenverfahren nach einem der Ansprüche 24 bis 26, **dadurch gekennzeichnet, daß** die Leuchtdioden über einen Pulsgenerator angesteuert werden, wobei die Pulsdauer eingestellt wird.

28. Farbschlierenverfahren nach einem der Ansprüche 24 bis 27, **dadurch gekennzeichnet, daß** der Untersuchungsbereich geblitzt beleuchtet wird.

29. Farbschlierenverfahren nach einem der Ansprüche 24 bis 28, **dadurch gekennzeichnet, daß** der Untersuchungsbereich kontinuierlich oder kontinuierlich erscheinend beleuchtet wird.

## Claims

1. Colour schlieren device for examining processes with light-deflecting operations in transparent media, having at least one light source (12; 66, 68, 70; 78), an examination area (18) of a specimen (20) being illuminatable by light of different colours,
**characterized in that** the at least one light source (12; 66, 68, 70; 78) is formed by light-emitting diodes (48) which emit in different colours, **in that** a plurality of light-emitting diodes (48) are arranged in an array (46), the light-emitting diodes (48) in the array (46) being arranged in rows (62) in a first direction (50) and in a transverse direction (52) to the first direction (50), and **in that** light-emitting diodes (48) of different primary colours are positioned in a prescribed arrangement in the array (46) so that the examination area (18) can be illuminated with mixed colours in a certain colour sequence.

2. Colour schlieren device in accordance with claim 1, **characterized in that** the at least one light source (12; 66, 68, 70; 78) is formed by a plurality of narrow-band high-power light-emitting diodes (48).

3. Colour schlieren device in accordance with claim 1 or 2, **characterized in that** light-emitting diodes with the primary colours red, green and blue are provided.

4. Colour schlieren device in accordance with any one of the preceding claims, **characterized in that** the arrangement of the light-emitting diodes (48) of different primary colours in the array (46) is such that only green light can be registered on an observation side (30) if there is no gradient in the specimen in the examination area (18).

5. Colour schlieren device in accordance with any one of the preceding claims, **characterized in that** a collimator device (56) is associated with the light-emitting diodes (48) in order to increase the light yield.

6. Colour schlieren device in accordance with claim 5, **characterized in that** a respective lens (58) is arranged in front of each light-emitting diode.

7. Colour schlieren device in accordance with claim 5 or 6, **characterized in that** the collimator device (56) comprises rows (60) of lenses.

8. Colour schlieren device in accordance with any one of claims 5 to 7, **characterized in that** the collimator device (56) is arranged and constructed such that it essentially has no imaging function and only ensures focusing of the light forwards.

9. Colour schlieren device in accordance with any one of claims 5 to 8, **characterized in that** a separating web (64) is arranged between adjacent rows (60) of lenses.

10. Colour schlieren device in accordance with any one of the preceding claims, **characterized in that** a plurality of light-emitting diode arrays (66, 68, 70) are provided.

11. Colour schlieren device in accordance with claim 10, **characterized in that** different light-emitting diode arrays (66; 68; 70) have different colour characteristics.

12. Colour schlieren device in accordance with claim 10 or 11, **characterized in that** one light-emitting diode array (66; 68; 70) from a plurality of light-emitting diode arrays has light-emitting diodes (48) of the same colour.

13. Colour schlieren device in accordance with claim 12, **characterized in that** a first light-emitting diode array (66) for light-emitting diodes having the primary colour red, a second light-emitting diode array (68) for light-emitting diodes having the primary colour green and a third light-emitting diode array (70) for light-emitting diodes having the primary colour blue are provided.

14. Colour schlieren device in accordance with any one of claims 10 to 13, **characterized in that** an optical device (72) is associated with the light-emitting diode arrays (66, 68, 70) for jointly illuminating the examination area (18).

15. Colour schlieren device in accordance with any one of the preceding claims, **characterized in that** one or more pulse generators (14) are provided for activating the light-emitting diodes (48).

16. Colour schlieren device in accordance with claim 15, **characterized in that** pulses of variable pulse duration are provided for activating the light-emitting diodes (48).

17. Colour schlieren device in accordance with claim 15 or 16, **characterized in that** the supply voltage and/or the supply current of the light-emitting diodes (48) is adjustable.

18. Colour schlieren device in accordance with claim 17, **characterized in that** the supply voltage and/or the supply current is adjustable per light-emitting diode (48) or is adjustable for the light-emitting diodes (48) of a certain colour.

19. Colour schlieren device in accordance with any one of claims 15 to 18, **characterized in that** rectangular pulses are provided for activating the light-emitting diodes (48).

20. Colour schlieren device in accordance with any one of the preceding claims, **characterized in that** the at least one light source (12; 66, 68, 70; 78) is activatable in such a way that the examination area (18) can be illuminated by flashing.

21. Colour schlieren device in accordance with any one of the preceding claims, **characterized in that** the at least one light source (12; 66, 68, 70; 78) is activatable in such a way that the examination area (18) can be illuminated continuously or seemingly continuously.

22. Colour schlieren device in accordance with any one of the preceding claims, **characterized in that** one or more narrow-band filters (44) which allow light in the spectral range of the light-emitting diodes (48) to pass through are arranged on an observation side (30).

23. Colour schlieren device in accordance with claim 22, **characterized in that** a three-band filter (44) is provided.

24. Colour schlieren method for examining processes with light-deflecting operations in transparent media, wherein a beam of coloured light passes through an examination area of a specimen, **characterized in that** the light is generated by light-emitting diodes of different colours, a plurality of light-emitting diodes being arranged in an array, the light-emitting diodes in the array being arranged in rows in a first direction and in a transverse direction to the first direction, and light-emitting diodes of different primary colours being positioned in a prescribed arrangement in the array so that the examination area is illuminated with mixed colours in a certain colour sequence.

25. Colour schlieren method in accordance with claim 24, **characterized in that** red, green and blue light is generated by means of corresponding light-emitting diodes.

26. Colour schlieren method in accordance with claim 24 or 25, **characterized in that** the intensity of the individual colours is set by activating the light-emitting diodes.

27. Colour schlieren method in accordance with any one of claims 24 to 26, **characterized in that** the light-emitting diodes are activated by a pulse generator, and the pulse duration is set.

28. Colour schlieren method in accordance with any one of claims 24 to 27, **characterized in that** the examination area is illuminated by flashing.

29. Colour schlieren method in accordance with any one of claims 24 to 28, **characterized in that** the examination area is illuminated continuously or seemingly continuously.

## Revendications

1. Dispositif de strioscopie polychromatique pour analyser des processus avec des opérations déflectrices de lumière dans des milieux transparents, avec au moins une source lumineuse (12 ; 66, 68, 70 ; 78), une zone d'analyse (18) d'un échantillon (20) pouvant être éclairée par une lumière de différentes couleurs, **caractérisé en ce que** ladite au moins une source lumineuse (12 ; 66, 68, 70 ; 78) est formée au moyen de diodes électroluminescentes (48) qui rayonnent selon des couleurs différentes, **en ce qu'**une pluralité de diodes électroluminescentes (48) est disposée dans un champ (46), les diodes électroluminescentes (48) étant disposées dans le champ (46) dans des rangées (62) dans une première direction (50) et dans une direction transversale (52) à la première direction (50) et **en ce que** des diodes électroluminescentes (48) de différentes couleurs fondamentales sont positionnées dans le champ (46) selon un agencement prédéfini de sorte que la zone d'analyse (18) puisse être éclairée avec une séquence définie de couleurs ayant des couleurs mélangées.

2. Dispositif de strioscopie polychromatique selon la revendication 1, **caractérisé en ce que** ladite au moins une source lumineuse (12 ; 66, 68, 70 ; 78) est formée au moyen d'une pluralité de diodes électroluminescentes de forte puissance (48) de bande étroite.

3. Dispositif de strioscopie polychromatique selon la revendication 1 ou 2, **caractérisé en ce que** des diodes électroluminescentes ayant les couleurs fondamentales rouge, vert et bleu sont prévues.

4. Dispositif de strioscopie polychromatique selon l'une quelconque des revendications précédentes, **caractérisé en ce que** l'agencement des diodes électroluminescentes (48) de différentes couleurs fondamentales est dans le champ (46) de manière telle que, lorsqu'aucun gradient n'est présent dans l'échantillon dans la zone d'analyse (18), uniquement la lumière verte puisse être enregistrée depuis un côté d' observation (30).

5. Dispositif de strioscopie polychromatique selon l'une quelconque des revendications précédentes, **caractérisé en ce qu'**un système collimateur (56) est associé aux diodes électroluminescentes (48) afin d'augmenter le rendement d'éclairage.

6. Dispositif de strioscopie polychromatique selon la revendication 5, **caractérisé en ce qu'**une lentille (58) respective est disposée devant chaque diode électroluminescente.

7. Dispositif de strioscopie polychromatique selon la revendication 5 ou 6, **caractérisé en ce que** le système collimateur (56) comprend des rangées de lentilles (60).

8. Dispositif de strioscopie polychromatique selon l'une quelconque des revendications 5 à 7, **caractérisé en ce que** le système collimateur (56) est disposé et formé de sorte qu'il n'ait sensiblement pas de fonction déflectrice et pourvoit uniquement à une mise en faisceau de la lumière vers l'avant.

9. Dispositif de strioscopie polychromatique selon l'une quelconque des revendications 5 à 8, **caractérisé en ce qu'**une nervure de séparation (64) est disposée entre des rangées de lentilles (60) voisines.

10. Dispositif de strioscopie polychromatique selon l'une quelconque des revendications précédentes, **caractérisé en ce qu'**une pluralité de champs de diodes électroluminescentes (66, 68, 70) est prévue.

11. Dispositif de strioscopie polychromatique selon la revendication 10, **caractérisé en ce que** des champs de diodes électroluminescentes différents (66 ; 68 ; 70) présentent des caractéristiques de couleur différentes.

12. Dispositif de strioscopie polychromatique selon la revendication 10 ou 11, **caractérisé en ce qu'**un champ de diodes électroluminescentes (66 ; 68 ; 70) d'une pluralité de champs de diodes électroluminescentes comprend des diodes électroluminescentes (48) de la même couleur.

13. Dispositif de strioscopie polychromatique selon la revendication 12, **caractérisé en ce qu'**un premier champ de diodes électroluminescentes (66) pour des diodes électroluminescentes ayant la couleur fondamentale rouge, un deuxième champ de diodes électroluminescentes (68) pour des diodes électroluminescentes ayant la couleur fondamentale verte et un troisième champ de diodes électroluminescentes (70) pour des diodes électroluminescentes ayant la couleur fondamentale bleue sont prévus.

14. Dispositif de strioscopie polychromatique selon l'une quelconque des revendications 10 à 13, **caractérisé en ce qu'**un système optique (72) est associé aux champs de diodes électroluminescentes (66, 68, 70) pour l'éclairage commun de la zone d'analyse (18).

15. Dispositif de strioscopie polychromatique selon l'une quelconque des revendications précédentes, **caractérisé en ce qu'**un ou plusieurs générateurs d'impulsions (14) sont prévus pour l'excitation des diodes électroluminescentes (48).

16. Dispositif de strioscopie polychromatique selon la revendication 15, **caractérisé en ce que** des impulsions de durée d'impulsion variable sont prévues pour l'excitation des diodes électroluminescentes (48).

17. Dispositif de strioscopie polychromatique selon la revendication 15 ou 16, **caractérisé en ce que** la tension d'alimentation et/ou le courant d'alimentation des diodes électroluminescentes (48) est réglable.

18. Dispositif de strioscopie polychromatique selon la revendication 17, **caractérisé en ce que** la tension d'alimentation et/ou le courant d'alimentation est réglable pour chaque diode électroluminescente (48) ou est réglable pour les diodes électroluminescentes (48) d'une certaine couleur.

19. Dispositif de strioscopie polychromatique selon l'une quelconque des revendications 15 à 18, **caractérisé en ce que** des impulsions carrées sont prévues pour l'excitation des diodes électroluminescentes (48).

20. Dispositif de strioscopie polychromatique selon l'une quelconque des revendications précédentes, **caractérisé en ce que** ladite au moins une source lumineuse (12 ; 66, 68, 70 ; 78) peut être excitée de sorte que la zone d'analyse (18) puisse être éclairée par des flashs.

21. Dispositif de strioscopie polychromatique selon l'une quelconque des revendications précédentes, **caractérisé en ce que** ladite au moins une source lumineuse (12 ; 66, 68, 70 ; 78) peut être excitée de sorte que la zone d'analyse (18) puisse être éclairée continuellement ou apparemment continuellement.

22. Dispositif de strioscopie polychromatique selon l'une quelconque des revendications précédentes, **caractérisé en ce que** sur un côté d'observation (30) sont disposés un ou plusieurs filtres à bande étroite (44) qui laissent passer la lumière dans le domaine spectral des diodes électroluminescentes (48).

23. Dispositif de strioscopie polychromatique selon la revendication 22, **caractérisé en ce qu'**un filtre à trois bandes (44) est prévu.

24. Procédé de strioscopie polychromatique pour l'analyse de processus avec des opérations déflectrices de lumière dans des milieux transparents, dans lequel un faisceau de lumières colorées rayonne au travers d'une zone d'analyse d'un échantillon, **caractérisé en ce que** la lumière est générée par des diodes électroluminescentes de couleurs différentes, une pluralité de diodes électroluminescentes étant disposée dans un champ, les diodes électroluminescentes dans le champ étant disposées dans des rangées dans une première direction et dans une direction transversale à la première direction et des diodes électroluminescentes de couleurs fondamentales différentes étant positionnées dans le champ selon un agencement prédéfini de sorte que la zone d'analyse soit éclairée avec une certaine séquence de couleurs ayant des couleurs mélangées.

25. Procédé de strioscopie polychromatique selon la revendication 24, **caractérisé en ce qu'**une lumière rouge, verte et bleue est générée au moyen de diodes électroluminescentes correspondantes.

26. Procédé de strioscopie polychromatique selon la revendication 24 ou 25, **caractérisé en ce que** l'intensité des différentes couleurs est réglée par le biais de l'excitation des diodes électroluminescentes.

27. Procédé de strioscopie polychromatique selon l'une quelconque des revendications 24 à 26, **caractérisé en ce que** les diodes électroluminescentes sont excitées par le biais d'un générateur d'impulsions, la durée d'impulsion étant réglée.

28. Procédé de strioscopie polychromatique selon l'une quelconque des revendications 24 à 27, **caractérisé en ce que** la zone d'analyse est éclairée par des flashs.

29. Procédé de strioscopie polychromatique selon l'une quelconque des revendications 24 à 28, **caractérisé en ce que** la zone d'analyse est éclairée continuellement ou apparemment continuellement.
